# FASCICULE DE BREVET EUROPEEN

(11) **EP 0 564 330 B1**
(45) Date de publication et mention de la délivrance du brevet: **12.06.1996**
(21) Numéro de dépôt: 93400777.4
(22) Date de dépôt: 25.03.1993
(51) Int. Cl.: G08C 19/02

(54) **Emetteur de commandes, récepteur adapté et système de commande pour dispositif d'essuyage de véhicule**
Befehlsender, angepasster Empfänger und System zum Steuern einer Wischanlage für Kraftfahrzeuge
Command sender, receiver fixed thereon and system for controlling a wiper apparatus for vehicle

(30) Priorité: 31.03.1992 FR 9203890
(43) Date de publication de la demande: 06.10.1993
(73) Titulaire: VALEO ELECTRONIQUE, 78960 Voisins-Le-Bretonneux (FR)
(72) Inventeur: Boucheron, Jean-Louis, F-77176 Savigny le Temple (FR)
(74) Mandataire: Gamonal, Didier

(56) Documents cités:
- DE-A- 2 506 827
- FR-A- 2 653 279
- US-A- 3 080 514
- US-A- 4 884 070

## Description

La présente invention concerne un émetteur de commandes, notamment pour véhicule automobile.

L'invention concerne aussi un récepteur de commandes adapté et un système de commande adapté à un système d'essuyage de véhicule à titre d'application de l'invention.

Elle trouve application dans le domaine des véhicules.

Une commande est une information particulière produite par un dispositif producteur de commandes, comme un commutateur ou un potentiomètre, et qui est actionné par exemple par un circuit de contrôle (en automatique) ou par un opérateur (en manuel).

Dans un premier genre de dispositifs de l'art antérieur, on sait produire des informations, par exemple sous forme binaire, constituées par une succession de "0" et de "1" dans le temps. Une telle information est représentée par une succession de "0" et de "1" selon une syntaxe prédéterminée.

Un tel dispositif, s'il est destiné à être connecté à un dispositif producteur de commandes pour commander une pluralité de charges, comme c'est le cas dans un véhicule, nécessite un multiplexage temporel, notamment pour réduire le nombre de lignes constituant le canal de transmission. Cette réduction du nombre de lignes est devenue un objectif à cause du coût représenté par la longueur cumulée des fils des solutions traditionnelles mais aussi par les difficultés de gestion des cablages.

Un tel dispositif de multiplexage entraîne tout d'abord l'exigence d'un protocole de communication qu'il faut gérer à l'aide de circuits spécialisés. D'autre part, il exige un nombre important de lignes de transmission de signaux qui augmente le coût de la fonction de transmission à l'intérieur du véhicule, puisque les charges sont le plus souvent éloignées des moyens de commande qui leur fournissent les informations, ou des capteurs dont on a besoin pour activer lesdites charges ou les moyens de commande, comme c'est le cas d'un tableau de bord de véhicule.

Enfin, le multiplexage exige des moyens parfaitement adaptés à l'environnement d'un véhicule, en particulier en ce qu'ils doivent être insensibles aux perturbations, tout en restant susceptibles de fonctionner même avec des tensions relativement variables. En effet, la tension de base est généralement fournie par la batterie du véhicule dont la charge fait varier la tension nominale.

Ces différents éléments entraînent que les dispositifs de multiplexage pour véhicule sont relativement coûteux et présentent un certain nombre d'inconvénients caractéristiques.

Dans un autre genre de dispositifs de l'art antérieur, on sait produire des informations, tout en réduisant le nombre de canaux de transmission.

Un tel dispositif est par exemple décrit dans le document US 4,884,070. Dans ce document, un émetteur de commandes est constitué par des résistances montées en série entre un câble de transmission et la masse, chaque résistance étant montée en parallèle avec un interrupteur "switch" qui, lorsqu'il est fermé court-circuite ladite résistance.

Ainsi, l'émetteur de commandes génère une grandeur électrique sous la forme d'une impédance qui peut présenter une pluralité de valeurs prédéterminées, chacune concernant une commande prédéterminée. Un courant constant circule dans le câble de transmission de sorte que la valeur de l'impédance correspondant à une commande déterminée est mesurée sous la forme d'une chute de tension en bout de câble, côté récepteur

Un tel système présente cependant des difficultés de mise au point dues au fait de la commande par niveau d'impédance. En effet, ce type de commande est très sensible aux variations d'impédance (impédance d'entrée variable d'un récepteur à un autre, impédance du câble, etc ...).

Le document DE 25 06 827 divulgue un générateur de signaux de commandes sous la forme d'un signal cyclique modulé en phase et amplitude, utilisant un amplificateur opérationnel monté en sommateur. Un tel dispositif est complexe et ne permet pas une lecture directe de la commande au niveau du récepteur.

De plus, selon un deuxième aspect de l'invention, il est nécessaire de transmettre une information qualitative associée à au moins une commande.

Une telle information qualitative est possible avec un dispositif tel que décrit dans le document US 4,884,070 dans lequel une des résistances est remplacée par un potentiomètre. Cependant, ce mode de réalisation souffre des inconvénients déjà évoqués qui sont inhérents à la commande par niveau d'impédance.

Afin de porter remède aux inconvénients de la technique antérieure précitée, la présente invention propose un émetteur de commande conforme au préambule de la revendication 1 qui se caractérise :
- en ce que ladite grandeur électrique est constituée par la tension entre au moins deux fils conducteurs d'un canal de transmission ;
- en ce que le générateur commandable est un générateur de tensions de valeurs prédéterminées de façon à produire une pluralité de valeurs de ladite tension ;
- et en ce que au moins une commande est de type dynamique.

Selon une autre caractéristique de l'invention, la gamme des valeurs de ladite commande est représentée par une gamme de valeurs de ladite grandeur électrique associée comprise entre une limite inférieure, supérieure à la valeur de la grandeur électrique qui la précède, et une limite supérieure, inférieure à la valeur de la grandeur électrique qui la suit.

Selon une caractéristique de l'invention, l'émetteur est connecté par une première borne à la borne positive de la batterie, et par une seconde borne à la masse du véhicule.

Selon une caractéristique de l'invention, le générateur commandable comprend une résistance connectée en série avec un circuit parallèle comprenant un pont diviseur constitué par des résistances en série, une diode Zener et un condensateur, les bornes du pont diviseur sont connectées aux bornes d'un contacteur tel qu'un commutateur à commande manuelle.

L'invention concerne aussi un récepteur de commandes, caractérisé en ce qu'il est connecté à une seconde extrémité d'un canal de transmission et en ce qu'il comporte un dispositif de mesure de tension de façon à décoder une pluralité de commandes entrées sur un émetteur tel que décrit ci-dessus, ledit émetteur étant connecté à la première extrémité du canal de transmission.

L'invention concerne aussi un système de commande d'un dispositif d'essuyage de véhicule, caractérisé en ce qu'il comporte un émetteur selon l'invention, disposé à distance du dispositif d'essuyage, et un récepteur tel que décrit ci-dessus connecté audit système d'essuyage, ledit émetteur et ledit récepteur étant reliés par un canal de transmission comportant au moins deux fils conducteurs.

Selon une autre caractéristique de l'invention, la sortie du récepteur est connectée à un décodeur de commandes d'essuyage.

Selon une autre caractéristique de l'invention, le système de commande comporte une commande d'intermittence et la grandeur électrique représentative de la commande d'intermittence est une commande dynamique.

Selon une autre caractéristique de l'invention, la période de la commande d'intermittence est représentée par une variation continue de la grandeur électrique représentative de la commande d'intermittence entre deux valeurs limite.

D'autres caractéristiques et avantages de la présente invention seront mieux compris à l'aide de la description et des figures annexées qui sont :
- la figure 1 : un schéma de principe d'un dispositif de transmission de commande comprenant un émetteur et un récepteur selon la présente invention ;
- la figure 2 : un graphe représentatif de la relation entre les diverses commandes et la grandeur électrique utilisée dans le schéma de la figure 1 ;
- les figures 3a et 3b : des graphes représentant respectivement l'évolution dans le temps d'une séquence de variation d'une grandeur électrique transmise sur la ligne de transmission entre un émetteur et un récepteur dans un dispositif d'essuyage de vitre de véhicule, et un graphe correspondant des décodages des commandes d'essuyage ;
- la figure 4 : un mode de réalisation d'un système de commande pour dispositif d'essuyage selon la présente invention ;
- la figure 5 : un autre mode de réalisation d'un générateur pour le système de commande du dispositif d'essuyage selon l'invention ;

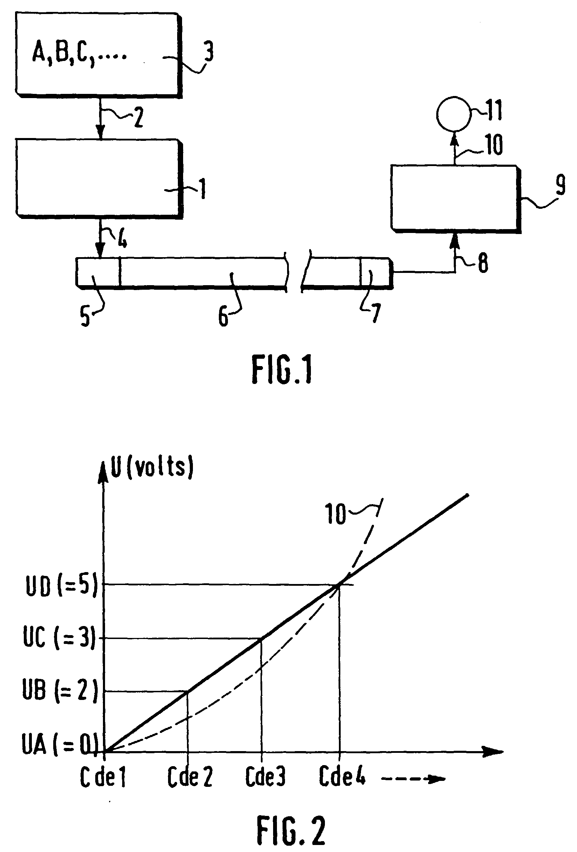

A la figure 1, un émetteur selon un premier mode de réalisation de l'invention comporte un générateur commandable 1 d'une grandeur électrique comme la tension électrique. Le générateur comporte une entrée de commande 2 qui est connectée à un dispositif 3 qui produit une commande composée d'au moins une information A, B, C de façon à générer sur la sortie 4 du générateur 1 la valeur de la grandeur électrique correspondante à la commande.

Le générateur 1 comporte un moyen dans lequel les diverses valeurs prédéterminées de la grandeur électrique sont enregistrées de façon à être engendrées lors de l'application sur l'entrée 3 de la commande correspondante.

La commande A, B, C ... est présentée à l'entrée 2 du générateur 1. Puis, la grandeur électrique correspondante est transmise à un dispositif 5 d'accès à un canal de transmission 6.

Dans un mode de réalisation, le dispositif 5 d'accès est constitué par un amplificateur dont la sortie est connectée à une paire de lignes conductrices. De ce fait, il est possible de proposer une transmission ou bien unipolaire ou bien bipolaire pour les signaux de tension représentatifs des informations A, B, C. On remarque que l'émetteur de l'invention ne comporte aucune entrée d'horloge et que de ce fait, l'information disponible par le canal 6 suit directement les changements de valeur de la grandeur électrique à la sortie du dispositif de commande 3.

L'autre extrémité du canal de transmission 5 est connecté à un récepteur adapté à recevoir la valeur de la grandeur électrique comme la tension qui a été déterminée sur l'émetteur. Le récepteur comporte un organe de connexion 7 à l'extrémité du canal de transmission 6 comme un connecteur et un amplificateur d'adaptation et/ou de protection.

La sortie de l'organe de connexion 7 est connectée par une entrée 8 à un décodeur 9 de la valeur en cours de la grandeur électrique et dont la sortie 9 transmet un signal de commande image de la commande produite sur le dispositif 3 de l'émetteur à une charge électrique 11 comme un système motorisé.

A la figure 2, on a représenté un graphe représentatif de la relation entre une suite de commandes Cde1, Cde2, Cde3, Cde4, ... ainsi que des valeurs de tension, respectivement UA = 0 volts, UB = 2 volts, UC = 3 volts, UD = 5 volts, ...

Dans ce mode de réalisation, la grandeur physique utilisée est une tension électrique dont les valeurs sont représentées en ordonnées U exprimées en Volts, tandis que l'axe des abscisses représente des commandes Cde1, Cde2, Cde3, Cde4, ...

A la figure 2, la relation choisie entre les informations et la grandeur électrique est de forme linéaire (représentée par une droite 10), mais on a sélectionné des valeurs de tension particulières qui ne correspondent pas à des écarts constants.

Dans un autre mode de réalisation, les écarts entre deux tensions successives sur l'axe des ordonnées U, sont constants.

Dans un autre mode de réalisation, la relation est représentée par une courbe 10 (représentée en tirets à la figure 2) et dont la forme est sélectionnée en fonction des caractéristiques de transmission et/ou de décodage sur le côté de réception. Dans ce cas, les valeurs des tensions correspondantes sont changées.

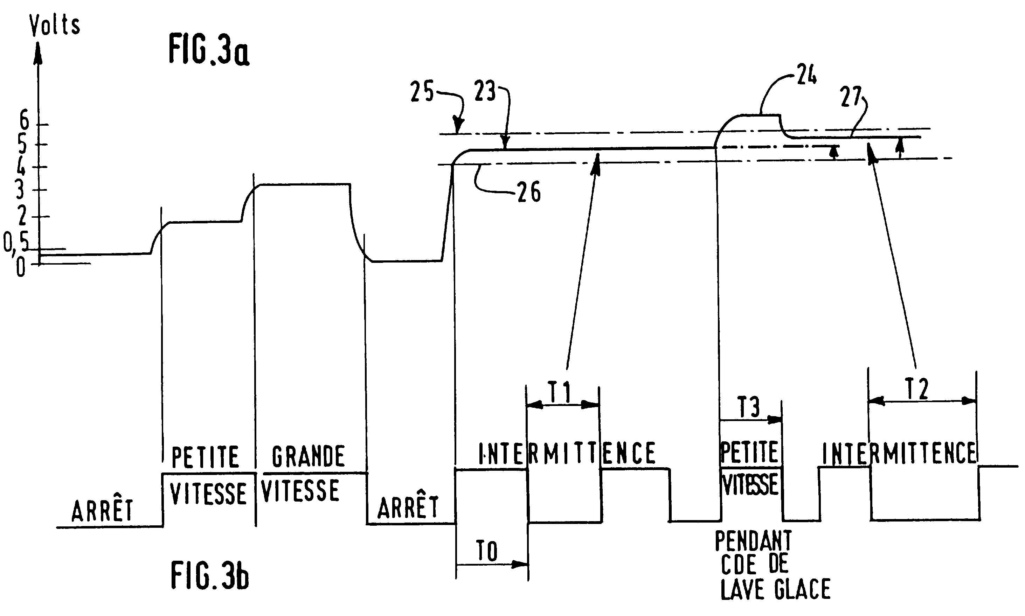

Aux figures 3a et 3b, on a représenté une application de l'invention à un dispositif de commande par niveau de tension destiné à un système d'essuyage de véhicule.

Dans un tel dispositif de commande, on utilise cinq commandes : Cde1 à Cde5, respectivement constituées par : l'arrêt du système, la petite vitesse d'essuyage, la grande vitesse d'essuyage, l'intermittence et la commande de lave-glace.

A la figure 3a, la grandeur physique engendrée par l'émetteur présente des valeurs qui sont respectivement les valeurs 0 Volts, 2 Volts, 3 Volts, 5 Volts et 6 Volts. La tension sur le canal de transmission présente une succession de paliers dont le niveau de tension représente la valeur de la grandeur électrique qui représente la commande en cours d'exécution.

En particulier, pour la commande d'intermittence, la valeur du palier 23 peut être fixée entre deux valeurs limites inférieure et supérieure, représentées par les niveaux 25 et 26, par exemple de plus ou moins 0,5 Volts autour de la valeur nominale de la grandeur représentative de la commande d'intermittence. Cette gamme de valeurs permet de transmettre la sélection de commande de la période T1 ou T2 de l'intermittence.

A la figure 3b, on a représenté la succesion des commandes exécutées par le système d'essuyage qui est connecté comme charge du récepteur de l'invention et dont l'entrée reçoit les grandeurs de la tension représentée à la figure 3a. Le système d'essuyage, ainsi qu'il est représenté démarre de la position d'arrêt réglée sur 0 Volts.

En fait, dans un mode préféré, le niveau représentatif de l'arrêt peut fluctuer autour de la valeur 0 Volts sans faire déclencher la charge sur la commande voisine. Ceci permet d'assurer l'insensibilité du système aux parasites de tension présents notamment sur le canal de transmission.

Puis, le système d'essuyage passe en petite vitesse, puis en grande vitesse, retourne pendant une période indéterminée à la position d'arrêt, puis entre dans une phase d'intermittence. Dans cette phase, le système d'essuyage est commandé pendant une durée T0 puis, retourne en position d'arrêt. Ce cycle est répété selon une période T1 déterminée ainsi qu'on l'a vu par la valeur réglée entre les niveaux 25 et 26 de grandeur électrique représentative de la commande d'intermittence.

Puis, le système d'essuyage reçoit une commande de lave-glace par un palier 24 de tension à 6 Volts (figure 3a). Dans ce cas, le système d'essuyage est programmé pour passer en essuyage sans intermittence, par exemple en petite vitesse, ou bien tant que la commande de lave-glace est activée, ou bien pendant une durée T3 prédéterminée à partir du début de la commande de lave-glace.

Dans l'exemple de la séquence d'essuyage représenté, le système d'essuyage retourne en phase d'intermittence, mais la valeur de la période d'intermittence a pris la valeur T2 (T2 > T1) car la tension détectée sur le canal de transmission a augmenté (palier 27).

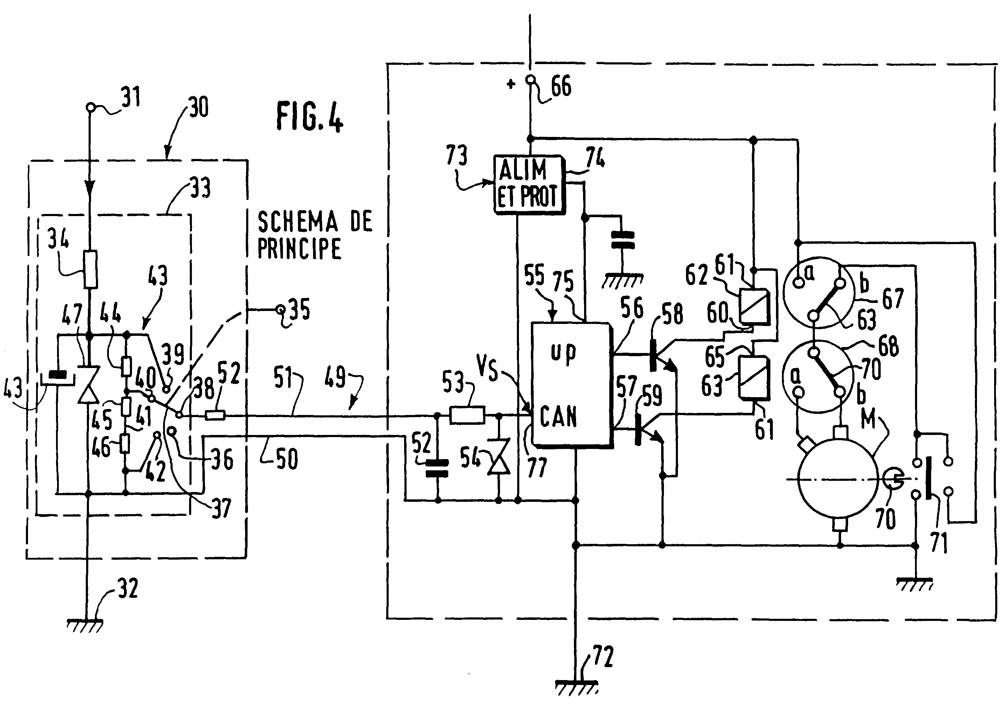

A la figure 4, on a représenté un système complet comportant le dispositif de commande selon un mode de réalisation de l'invention connecté à un système d'essuyage.

A la figure 4, l'émetteur 30 est alimenté par la batterie entre une borne 31 connectée à la borne positive de la batterie et 32 connectée à la borne négative de la batterie ou à la masse du véhicule.

D'autre part, l'émetteur comporte un générateur 33 constitué principalement par une résistance 34 connectée en série avec un circuit modulable en fonction d'une information d'entrée 35. Cette information est constituée par la commande manuelle d'un commutateur 36, par exemple disposé sur le tableau de bord, et dont le doigt mobile 37 met en contact une borne 38 avec l'une des bornes 39, 40, 41, 42 du contacteur 36. Les bornes respectivement 39, 40, 41, et 42 sont connectées aux bornes correspondantes d'un pont diviseur 43 constitué de résistances en série respectivement 44, 45, 46. D'autre part le pont diviseur 43 est monté en parallèle respectivement avec une diode Zener 47 et un condensateur de forte valeur 48. Le circuit parallèle, constitué par le pont diviseur 43, la diode Zener 47 et le condensateur 48, est connecté à l'autre borne de la résistance 34 et à la borne 32 précitée.

D'autre part le point commun entre la borne 32 et le circuit parallèle 43, 47, 48 est connecté à un premier fil 50 du canal de transmission 49. Le second fil 51 du canal de transmission est connecté à un dispositif d'entrée 52 installé dans le générateur 30.

Ce dispositif d'entrée est constitué par une résistance 52 de protection. Dans un mode de réalisation, on ajoute à la résistance 52, une diode Zener en série.

D'autre part, l'extrémité correspondante du canal de transmission 49 est connectée au dispositif de commande du système d'essuyage et comporte principalement un récepteur adapté comportant un organe de connexion muni d'un circuit de filtrage constitué par un condensateur 52, une résistance 53 et une diode Zener 54. La sortie du circuit de filtrage 52-54 est connectée au port d'entrée de conversion analogique numérique d'un micro-contrôleur 55. Un tel micro-contrôleur est déjà utilisé dans la plupart des systèmes de commande de dispositifs d'essuyage de façon à dérouler des séquences de commande pré-enregistrées et aussi à recevoir sur des ports d'entrée analogiques un certain nombre de mesures provenant, par exemple, d'un capteur d'humidité ou d'un capteur de position et/ou de vitesse de balayage sur la vitre. De ce fait, le moyen de l'invention n'exige pas d'augmenter de façon considérable les moyens déjà mis en oeuvre dans les dispositifs de l'art antérieur pour la stricte fonction d'essuyage.

Le micro-contrôleur 55 comporte principalement deux sorties logiques respectivement 56 et 57, qui commandent des transistors 58 et 59 dont les sorties de puissance sont connectées à des premières bornes respectivement 60 et 61 de relais ou interrupteurs analogiques 62 et 63. les autres bornes d'entrée des relais 62 et 63 respectivement 64 et 65 sont connectées en commun à une borne d'alimentation positive 66.

D'autre part, le dispositif à deux relais 62 et 63 présente des commutateurs appairés respectivement 67 et 68 à deux positions, dont le doigt mobile respectivement 69 ou 70, vient en contact sur des positions notées respectivement "a" ou "b" sur chacun des deux relais.

En particulier, la position des relais 67 et 68 sur "b" correspond à la commande d'arrêt fixe, tandis que la position sur "a" du relais 67 et la position sur "b" du relais 68 correspondent à la commande petite vitesse, et la position sur "a" des deux relais 67 et 68 correspond à la commande grande vitesse. Enfin, ainsi qu'il est connu, le moteur M comporte sur la sortie de son axe, éventuellement muni d'une réduction mécanique, un capteur 70 d'arrêt ou de butée de façon à commander un interrupteur 71 ainsi qu'il est connu.

Le micro-contrôleur 55 est alimenté depuis la borne 66 par l'intermédiaire d'une borne 72 mise à la masse ou à la borne négative de la batterie et est protégé par un dispositif d'alimentation régulé et de protection des surtensions 73 ainsi qu'il est connu. Le dispositif 73 comporte une sortie 74 qui est connectée à l'entrée de tension positive 75 du micro-contrôleur 55.

Le micro-contrôleur comporte dans une mémoire pré-programmée, un programme de décodage des valeurs de la tension VS présente sur son port d'entrée analogique 77. Cette tension VS est représentative de la grandeur relative à l'information ou ordre de commande émise sur le canal de transmission 49 par l'émetteur 30.

Il est ainsi possible, en fonction notamment du schéma des figures 3a et 3b, de décoder les divers ordres.

On n'a pas représenté en particulier, la commande de mise en route de la pompe de lave-glace mais cette disposition supplémentaire est à la portée de l'homme de métier.

Le port de sortie analogique (non représenté), pour la commande de la pompe de lave-glace, est activé par le micro-contrôleur notamment en fonction de la valeur VS sur son port d'entrée 77.

On remarque que la ligne 50 est aussi connectée à la borne 72 masse commune. De cette façon, on assure une bonne référence en tension.

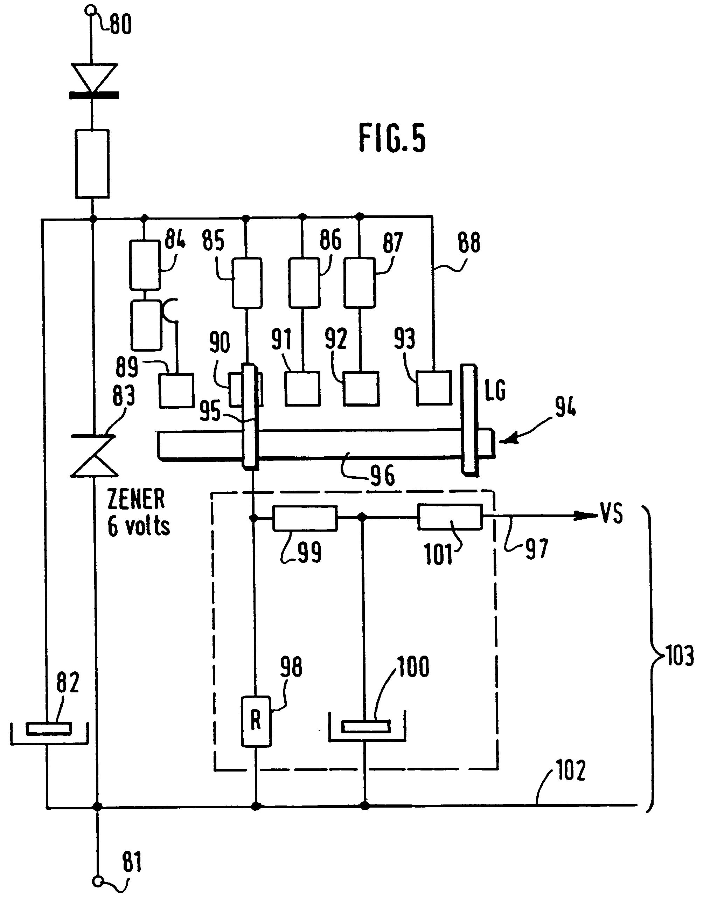

A la figure 5, on a représenté un autre mode de réalisation permettant de résoudre certains problèmes d'affaiblissement et/ou de parasitage sur l'émetteur 30. Dans ce mode de réalisation, l'émetteur est connecté entre une borne 80 d'alimentation positive provenant d'une batterie et une borne 81 d'alimentation négative connectée à une batterie ou à la masse du véhicule. On reconnaît aussi un circuit parallèle comportant un premier condensateur 82 et une diode Zener de référence 83. Dans un mode préféré de réalisation, la diode Zener fixe la tension maximale, par exemple à 6 Volts, pour la tension disponible sur le canal de transmission. En particulier, les grandeurs en tension représentatives des informations et/ou de leur combinaison sont donc limitées à 6 Volts.

Afin de réaliser le dispositif de commande et/ou de transmission d'information selon l'invention, le circuit parallèle est composé aussi d'un réseau de résistances parallèles respectivement 84,85,86 et 87.

D'autre part, les résistances sont connectées à des plots respectivement 89,90,91,92,93 d'un contacteur 94. Le contacteur 94 comporte un doigt mobile 95 qui est manoeuvré manuellement ou par tout autre moyen et qui met en relation le plot en contact avec une piste 96. La piste 96 est connectée à un réseau servant de dispositif d'entrée pour la ligne de transmission 97 composée d'une première résistance 98 connectée sur un filtre composé d'une résistance 99 et d'un condensateur 100, et dont la sortie est connectée à une première borne d'une résistance 101, dont l'autre borne est connectée à la ligne 97 du canal de communication. D'autre part, la ligne 102 connectée aussi à la borne 81 de mise à la masse ou au potentiel négatif selon le cas, est transmise au canal de transmission 103.

L'invention n'exclue pas que deux charges soient connectées à deux canaux de transmission différents notamment si leur codage en valeurs de la grandeur physique est identique.

## Revendications

1. Emetteur de commandes, notamment pour véhicule automobile, comportant un générateur commandable qui produit une grandeur électrique qui peut présenter une pluralité de valeurs prédéterminées, chacune concernant une commande prédéterminée produite par un dispositif (3) producteur de commandes de base, caractérisé :
- en ce que ladite grandeur électrique (4) est constituée par la tension entre au moins deux fils conducteurs d'un canal de transmission (6) ;
- en ce que le générateur commandable est un générateur de tensions de valeurs prédéterminées de façon à produire une pluralité de valeurs de ladite tension ;
- et en ce que au moins une commande est de type dynamique.

2. Emetteur de commandes selon la revendication 1, caractérisé en ce que la gamme des valeurs de la grandeur électrique est représentée par une gamme de valeurs de la tension associée comprise entre une limite inférieure, supérieure à la valeur de la grandeur électrique qui la précède, et une limite supérieure, inférieure à la valeur de la grandeur électrique qui la suit.

3. Emetteur de commandes selon la revendication 1 ou 2, caractérisé en que l'émetteur (1,30) est connecté par une première borne (31) à la borne positive de la batterie, et par une seconde borne (32) à la masse du véhicule.

4. Emetteur de commandes selon l'une des revendications précédentes, caractérisé en ce que le générateur commandable comprend une résistance (34) connectée en série avec un circuit parallèle comprenant un pont diviseur (43) constitué par des résistances en série (44,45,46), une diode Zener (47) et un condensateur (48), et en ce que les bornes du pont diviseur (43) sont connectées aux bornes (39,40,41,42) d'un contacteur (36) tel qu'un commutateur à commande manuelle.

5. Récepteur de commandes, caractérisé en ce qu'il est connecté à une seconde extrémité d'un canal de transmission (6) et en ce qu'il comporte un dispositif de mesure de tension de façon à décoder une pluralité de commandes entrées sur un émetteur (1,30) selon l'une des revendications 1 à 4, ledit émetteur étant connecté à la première extrémité (5) du canal de transmission.

6. Système de commande d'un dispositif d'essuyage de véhicule, caractérisé en ce qu'il comporte un émetteur selon l'une des revendications 1 à 4, disposé à distance du dispositif d'essuyage, et un récepteur selon la revendication 5 connecté audit dispositif d'essuyage, ledit émetteur et ledit récepteur étant reliés l'un à l'autre par un canal de transmission comportant au moins deux fils conducteurs.

7. Système de commande selon la revendication 6, caractérisé en ce que la sortie du récepteur est connectée à un décodeur de commandes d'essuyage.

8. Système de commande selon la revendication 6 ou 7, caractérisé en ce qu'il comporte une commande d'intermittence et en ce que la grandeur électrique représentative de la commande d'intermittence est une commande dynamique.

9. Système de commande selon la revendication 8, caractérisé en ce que la période de la commande d'intermittence est représentée par une variation continue de la grandeur électrique représentative de la commande d'intermittence entre deux valeurs limite (23,26).

## Patentansprüche

1. Befehlssender, insbesondere für Kraftfahrzeuge, bestehend aus einem steuerbaren Generator, der eine elektrische Größe erzeugt, die eine Mehrzahl vorbestimmter Werte aufweisen kann, welche sich jeweils auf einen vorbestimmten Befehl beziehen, der durch eine Vorrichtung (3) zur Erzeugung von Grundbefehlen erzeugt wird, dadurch gekennzeichnet:
- daß die besagte elektrische Größe (4) aus der Spannung zwischen wenigstens zwei Leitungsdrähten eines Übertragungskanals (6) besteht;
- daß der steuerbare Generator ein Spannungsgenerator für Spannungen mit vorbestimmten Werten ist, so daß eine Mehrzahl von Werten der besagten Spannung erzeugt wird;
- und daß wenigstens ein Befehl ein dynamischer Befehl ist.

2. Befehlssender nach Anspruch 1, **dadurch gekennzeichnet,** daß der Wertebereich der elektrischen Größe durch einen Wertebereich der zugehörigen Spannung zwischen einer Untergrenze, die über dem vorangehenden Wert der elektrischen Größe liegt, und einer Obergrenze dargestellt wird, die unter dem nachfolgenden Wert der elektrischen Größe liegt.

3. Befehlssender nach Anspruch 1 oder 2, **dadurch gekennzeichnet,** daß der Sender (1, 30) über eine erste Klemme (31) an die Plusklemme der Batterie und über eine zweite Klemme (32) an die Masse des Fahrzeugs angeschlossen ist.

4. Befehlssender nach einem der vorangehenden Ansprüche, **dadurch gekennzeichnet,** daß der steuerbare Generator einen Widerstand (34) umfaßt, der mit einer Parallelschaltung in Reihe geschaltet ist, die eine Teilerbrücke (43) enthält, welche aus Reihenwiderständen (44, 45, 46), einer Zenerdiode (47) und einem Kondensator (48) besteht, und daß die Klemmen der Teilerbrücke (43) an die Klemmen (39, 40, 41, 42) eines Schaltglieds (36), etwa eines handbetätigten Schalters, angeschlossen sind.

5. Befehlsempfänger , **dadurch gekennzeichnet,** daß er an ein zweites Ende eines Übertragungskanals (6) angeschlossen ist und daß er eine Spannungsmeßvorrichtung umfaßt, um eine Mehrzahl von Befehlen zu entschlüsseln, die an einem Sender (1, 30) nach einem der Ansprüche 1 bis 4 eingegeben werden, wobei der besagte Sender an das erste Ende (5) des Übertragungskanals angeschlossen ist.

6. System zum Steuern einer Wischanlage für Kraftfahrzeuge , **dadurch gekennzeichnet,** daß es einen Sender nach einem der Ansprüche 1 bis 4 umfaßt, der in einer Entfernung von der Wischanlage angeordnet ist, und einen Empfänger nach Anspruch 5, der an die besagte Wischanlage angeschlossen ist, wobei der besagte Sender und der besagte Empfänger durch einen Übertragungskanal miteinander verbunden sind, der wenigstens zwei Leitungsdrähte umfaßt.

7. Steuersystem nach Anspruch 6, **dadurch gekennzeichnet,** daß der Ausgang des Empfängers an einen Wischbefehldecodierer angeschlossen ist.

8. Steuersystem nach Anspruch 6 oder 7, **dadurch gekennzeichnet,** daß es einen Intervallbefehl umfaßt und daß die für den Intervallbefehl repräsentative elektrische Größe ein dynamischer Befehl ist.

9. Steuersystem nach Anspruch 8, **dadurch gekennzeichnet,** daß die Zeitdauer des Intervallbefehls durch eine kontinuierliche Veränderung der für den Intervallbefehl repräsentativen elektrischen Größe zwischen zwei Grenzwerten (23, 26) dargestellt wird.

## Claims

1. A control signal emitter, especially for a motor vehicle, including a controllable generator which produces an electrical quantity that can assume a plurality of predetermined values, each of which is related to a predetermined control signal produced by a device (3) for producing originating control signals, characterised:
- in that the said electrical quantity (4) consists of the voltage between at least two conductive wires in a transmission line (6);
- in that the controllable generator is a voltage generator for generating voltages of predetermined values, so as to produce a plurality of values of the said voltage;
- and in that at least one control signal is of a dynamic type.

2. A control signal emitter according to Claim 1, characterised in that the range of values of the electrical quantity is represented by a range of values of the associated voltage, between a lower limit greater than the preceding value of the electrical quantity, and an upper limit lower than the next following value of the electrical quantity.

3. A control signal emitter according to Claim 1 or Claim 2, characterised in that the emitter (1, 30) is connected through a first terminal (31) to the positive terminal of the battery, and through a second terminal (32) to the earth of the vehicle.

4. A control signal emitter according to one of the preceding Claims, characterised in that the controllable generator includes a resistor (34) connected in series with a parallel circuit comprising a divider bridge (43) which consists of resistors (44, 45, 46) in series, a Zener diode (47) and a capacitor (48), and in that the terminals of the divider bridge (43) are connected to the terminals (39, 40, 41, 42) of a contactor (36), such as a manually controllable switch.

5. A control signal receiver, characterised in that it is connected to a second end of a transmission line (6), and in that it comprises a voltage measuring device such as to decode a plurality of control signals received from an emitter (1, 30) in accordance with one of Claims 1 to 4, the said emitter being connected to the first end (5) of the transmission line.

6. A control system for a vehicle screen wiping apparatus, characterised in that it includes an emitter according to one of Claims 1 to 4, remote from the wiping apparatus, and a receiver according to Claim 5 connected to the said wiping apparatus, the said emitter and the said receiver being connected to each other through a transmission line comprising at least two conductive wires.

7. A control system according to Claim 6, characterised in that the output of the receiver is connected to a wiping control signal decoder.

8. A control system according to Claim 6 or Claim 7, characterised in that it includes an intermittent wiping control signal, and in that the electrical quantity that represents the intermittent wiping control signal is a dynamic control signal.

9. A control system according to Claim 8, characterised in that the period of the intermittent wiping control signal is represented by a continuous variation in the electrical quantity that represents the intermittent wiping control signal between two limiting values (23, 26).
